Europäisches Patentamt

European Patent Office

Office européen des brevets

(19)

(11) Veröffentlichungsnummer : **0 442 373 B1**

## (12) EUROPÄISCHE PATENTSCHRIFT

(45) Veröffentlichungstag der Patentschrift :
**29.06.94 Patentblatt 94/26**

(51) Int. Cl.⁵ : **B60R 21/16,** D03D 1/02

(21) Anmeldenummer : **91101657.4**

(22) Anmeldetag : **07.02.91**

(54) **Gewebe für Airbags.**

(30) Priorität : **12.02.90 DE 4004216**

(43) Veröffentlichungstag der Anmeldung :
**21.08.91 Patentblatt 91/34**

(45) Bekanntmachung des Hinweises auf die
Patenterteilung :
**29.06.94 Patentblatt 94/26**

(84) Benannte Vertragsstaaten :
**AT BE CH DE DK ES FR GB GR IT LI LU NL SE**

(56) Entgegenhaltungen :
**EP-A- 0 314 867**
**CA-A- 974 745**
**DE-C- 3 644 554**
**US-A- 3 842 583**
**US-A- 4 559 975**

(73) Patentinhaber : **HOECHST**
**AKTIENGESELLSCHAFT**
**D-65926 Frankfurt (DE)**

(72) Erfinder : **Swoboda, Peter**
**Alemannenstrasse 20**
**W-8934 Grossaitingen (DE)**
Erfinder : **Höhnke, Gerhard**
**Liebigstrasse 3b**
**W-8903 Bobingen (DE)**
Erfinder : **Göltner, Wolfgang, Dr.**
**Möcherweg 18**
**W-6430 Bad Hersfeld (DE)**

EP 0 442 373 B1

Jouve, 18, rue Saint-Denis, 75001 PARIS

## Beschreibung

Die Erfindung betrifft ein Gewebe aus einem synthetischen Garn für einen Airbag, wie er zunehmend als Sicherheitseinrichtung in Kraftfahrzeugen eingesetzt wird.

Ein Airbag hat die Aufgabe, sich bei einer Gefahrensituation durch sehr schnell einströmendes Gas zu einem Ballon zu entfalten, der aufgrund des darin herrschenden Überdrucks den Druck eines dagegengeschleuderten Körpers wirksam aber weich abfangen kann. Dies setzt voraus, das der im Airbag herrschende Überdruck solange erhalten bleibt, bis das Fahrzeug und damit der abzufedernde Körper zum Stillstand gekommen ist. Danach soll der schützende Ballon aber möglichst schnell zusammenfallen, damit er weitere Aktionen der geschützten Person nicht behindert.

Ein Airbag braucht daher eine sehr genau geplante Charakteristik des zeitlichen Druck-Auf-und Abbaus was dadurch erreicht werden kann, daß in eine insgesamt gasundurchlässige Hülle des Airbags voreingestellte Auslaßventile eingebaut sind oder daß ein Teil seiner Hülle, der sogenannte Mantel, gasdicht ist, während die Seitenteile eine geplante Gasdurchlässigkeit aufweisen.

Wichtige Anforderungen an das Gewebe eines derartigen Airbags sind geringe Luftdurchlässigkeit, ein geringes Gewebegewicht und eine kleine Gewebedicke (für eine platzsparende Unterbringung im Kraftfahrzeug) sowie eine hohe Gewebe-Höchstzugkraft und Höchstzugkraftdehnung (für die Arbeitsaufnahme beim explosionsartigen Entfalten des Airbags).

Die in der Praxis eingesetzten Airbags bestehen überwiegend aus einem gummierten Polyamidgewebe, wobei die Gummierung die geringe Luftdurchlässigkeit sicherstellt. Ein derartiges beschichtetes Gewebe ist zum Beispiel in der DE-A- 23 17 991 beschrieben.

Aus der EP-A- 314 867 ist ein unbeschichtetes Polyamidgewebe für einen Airbag bekannt, bei dem die geringe Luftdurchlässigkeit durch Schrumpfen, Thermofixieren sowie Kalandrieren des Gewebes erreicht werden soll. In dieser Veröffentlichung wird erwähnt, daß statt Polyamidfäden auch Fäden aus Polyester, Aramiden, PPS, Polyimiden und dgl. verwendet werden können. Das dort beschriebene Gewebe hat eine Leinwand-bindung mit 34 Kettfäden/cm aus dtex 470 und 16 Schußfäden/cm aus dtex 470.

Aus der japanischen Patentanmeldung Sho-64-41438 (Derwent-Referat JA 89-090413/12) ist ein Grundgewebe für einen Airbag bekannt, das aus einem Garn mit einer Reißfestigkeit von mehr als 8,5 g/den und einem Einzelfasertiter von weniger als 3 den besteht und das ein Flächengewicht von 50 bis 300 g/m² hat.

Das eingesetzte Garn soll einen Titer zwischen 150 und 3000 den haben und ein Multifilamentgarn (Endlosgarn) oder ein Spinnfasergarn sein und es kann auch einen Bausch aufweisen. Als Material für die Herstellung der Filamente bzw. Fasern sollen sich praktisch alle spinnfähigen synthetischen oder halbsynthetischen Polymere eignen, wie Polyamide, Polyester, Vinylpolymere, Polyolefine, Rayon, Polyoximethylen, Polysulfone. Ebenso sollen sich aber auch auch Kohlenstoffasern, Glasfasern, keramische Fasern oder Metallfasern eignen.

Zur Herstellung eines Airbags aus diesem bekannten Grundgewebe muß dieses wie üblich gummiert werden. Diese Druckschrift bietet dem Fachmann keinen Hinweis um zu einem Gewebe zu gelangen, das ohne Gummierung zur Herstellung eines Airbags geeignet ist.

Eine Gummierung des Polyamidgewebes macht die Herstellung des Airbags aufwendig und teuer und führt zu einem erhöhten Platzbedarf des gefalteten Airbags. Auch neigen diese Polyamidgewebe wegen der Gummierung zu einer Versprödung, was die Lebensdauer des Airbags herabsetzt. Das im Stand der Technik anstelle einer Gummierung vorgesehene Schrumpfen, Thermo-fixieren und Kalandrieren des Gewebes macht die Herstellung des Airbags ebenfalls aufwendig und teuer.

Der Erfindung liegt die Aufgabe zugrunde, ein beschichtungsfreies Gewebe aus einem synthetischen Garn für einen Airbag zu schaffen, das sich durch besonders einfache Herstellbarkeit auszeichnet und dennoch die an das Airbag-Material zu stellenden Anforderungen, wie geringe Luftdurchlässigkeit, niedriges Gewebegewicht, kleine Gewebedicke sowie hohe Gewebefestigkeit erfüllt.

Diese Aufgabe wird durch die im Patentanspruch 1 gekennzeichnete Erfindung gelöst.

Wie sich überraschenderweise gezeigt hat, wird durch die Verwendung eines feinkapillarigen hochfesten Polyesterfilamentgarnes eines Einzeltiters von 4 dtex oder weniger und eines Garntiters im Bereich von 250 bis 550 dtex ohne besondere Gewebenachbehandlung wie Schrumpfen, Thermo-fixieren oder Kalandrieren ein Airbag-Gewebe geschaffen, das bereits ohne Beschichtung und Gummierung die erforderlichen Eigenschaften, insbesondere eine geringe Luftdurchlässigkeit besitzt. Das erfindungsgemäß ausgebildete Gewebe zeichnet sich somit durch besonders einfache Herstellbarkeit aus. Wegen der fehlenden Gummierung ist die Gefahr einer Versprödung nicht gegeben, was sich entsprechend günstig auf die Lebensdauer auswirkt.

Der Einzeltiter des Polyestergarnes kann z. B. 3,3 dtex betragen und ist vorzugsweise sogar kleiner als 3 dtex.

Der Garntiter des Polyestergarnes liegt vorzugsweise im Bereich von 280 bis 450 dtex, insbesondere im Be-

2

reich von 280 bis 350 dtex.

Die geringe Luftdurchlässigkeit des erfindungsgemäß ausgebildeten Gewebes dürfte insbesondere auf die feinkapillarigen Kett- und Schußgarne aus Polyester zurückzuführen sein. Der feine Garntiter führt zu einem niedrigen Gewebegewicht und einer kleinen Gewebedicke. Das Flächengewicht des Gewebes beträgt vorzugsweise weniger als 200 g/m², insbesondere weniger als 190 g/m², beispielsweise 177 g/m², während die Gewebedicke vorzugsweise weniger als 0,35mm, besonders bevorzugt weniger als 0,30 mm, insbesondere weniger als 0,26 mm beträgt.

Vorzugsweise besitzt das Polyestergarn eine feinheitsbezogene Höchstzugkraft von mehr als 60 cN/tex und eine Höchstzugkraft-Dehnung von mehr als 15%. Gut geeignet für die Herstellung des erfindungsgemäßen Gewebes ist z.B. das handelsübliche Polyestergarn (R)TREVIRA HOCHFEST der Firma Hoechst AG. Die Höchstzugkraft des Gewebes sollte mehr als 220 daN und die Höchstzugkraftdehnung des Gewebes mehr als 25%, jeweils bezogen auf einen 5 cm breiten Gewebestreifen, betragen. Diese Festigkeits- und Dehnungswerte stellen sicher, daß das Gewebe für die Arbeitsaufnahme bei dem explosionsartigen Aufweiten des Airbags geeignet ist.

Für den erfindungsgemäßen Zweck können Gewebe unterschiedlichster Gewebebindung, wie z. B. eine Leinwandbindung 1/1 eingesetzt werden. Zur gezielten Modifizierung der Gewebe können jedoch Varianten, wie z.B. eine Ripstopbindung oder eine Kreuzköperbindung bevorzugt sein.

Um eine möglichst geringe Luftdurchlässigkeit zu erzielen, wie es insbesondere für den Mantelbereich des Airbags erwünscht ist, sollte das Gewebe eine - für den gewählten Garntiter und die gewählte Gewebekonstruktion - maximal dichte Gewebeeinstellung besitzen, d.h., daß das Gewebe die beim Weben maximal mögliche Fadenzahl pro Längeneinheit in Kett- und Schußrichtung erhalten soll.

Für ein Gewebe mit Leinwandbindung 1/1, beispielsweise aus einem 313 dtex Polyestergarn, werden zweckmäßigerweise 23 bis 29 Fäden/cm - beispielsweise 26 Fäden/cm - in Kette und Schuß eingestellt.

Bei niedrigerem Garntiter wird eine entsprechend höhere, bei größeren Garntitern eine entsprechend niedrigere Fadenzahl/cm eingestellt. Bei Geweben beispielsweise mit Ripstopbindung liegt der entsprechende Bereich der Fadenzahl bei 25 bis 30 Fäden/cm.

In einer besonders bevorzugten Ausführungsform der Erfindung hat das Gewebe des Airbag-Mantels eine Ripstopbindung und eine maximal dichte Gewebeeinstellung. Weiterhin ist es hierbei bevorzugt wenn nach je 3 bis 8 mm ein Mehrfachgarn folgt. Besonders zweckmäßig ist ein Abstand von ca. 4,5 bis 5,5 mm zwischen den Mehrfachgarnen und die Wahl eines Doppelgarns als Mehrfachgarn.

Hat der Airbag zusätzlich zu seinem gasdichten Gewebeteil einen gasabführenden Gewebeteil, so besteht der gasabführende Teil vorzugsweise aus einem Gewebe, dessen Gewebeeinstellung um 10 bis 25 % niedriger ist als die des gasdichten Gewebeteils, d.h. die für eine Leinwandbindung 1/1 und ein 313 dtex Garn bei etwa 18 bis 26 Fäden/cm, beispielsweise bei 22 Fäden/cm in der Kette und 24 Fäden/cm im Schuß beträgt. Wie beim Mantelbereich werden bei niedrigerem Garntiter eine entsprechend höhere, bei größeren Garntitern eine entsprechend niedrigere Fadenzahl/cm eingestellt. Besonders bevorzugt wird das gasabführende Gewebe in Kreuzköperbindung, insbesondere in einer Kett-Kreuzköperbindung ausgeführt.

Durch diese niedrigere Gewebeeinstellung wird die geplante höhere Luftdurchlässigkeit des Gewebes erzielt, wie sie für den gasabführenden Gewebeteil erforderlich ist. Im übrigen kann der gasabführende Gewebeteil praktisch die gleichen Garn- und Gewebeeigenschaften wie der gasdichte Gewebeteil haben.

In weiterer Ausgestaltung der Erfindung besteht das Gewebe des gasdichten Teil (Mantelteil) aus gedrehten Kettgarnen und ungedrehten Schußgarnen, während bei dem Gewebe des gasabführenden Teils das Schußgarn ungedreht, aberauch gedreht sein kann. Die Drehung der Garne liegt vorzugsweise im Bereich von 110 bis 130/m insbesondere bei etwa 120/m.

Zweckmäßigerweise wird ein ungeschlichtetes Polyestergarn mit einem Thermoschrumpf bei 200°C von weniger als 9 %, vorzugsweise weniger als 6 %, insbesondere weniger als 4,7 %, verwendet.

Wie bereits erwähnt, ist bei dem erfindungsgemäß ausgebildeten Gewebe ein Schrumpfen und Thermofixieren nicht erforderlich. Im Hinblick auf die geringe Gewebedicke ist auch ein Kalandrieren nicht notwendig. Diese Maßnahmen werden daher vorzugsweise unterlassen.

Ein Gegenstand dieser Erfindung ist auch ein Airbag, insbesondere ein solcher, bei dem ein gasdichter und ein gasabführender Gewebeteil vorgesehen sind, der im wesentlichen aus den oben beschriebenen, unbeschichteten und ungummierten und vorzugsweise auch ungeschlichteten und unkalandrierten Geweben aufgebaut ist.

Bei einer bevorzugten Ausführungsform des erfindungsgemäßen Airbags besteht der gasdichte Gewebeteil aus einem Gewebe mit maximal dichter Gewebeeinstellung, insbesondere mit Ripstopbindung, wobei vorzugsweise nach je 3 bis 8 mm ein Mehrfachgarn folgt. Besonders zweckmäßig ist ein Abstand von ca. 4,5 bis 5,5 mm zwischen den Mehrfachgarnen und die Wahl eines Doppelgarns als Mehrfachgarn.

Bei einer weiteren bevorzugten Ausführungsform besteht der gasabführende Gewebeteil aus einem Gewebe, dessen Gewebeeinstellung um 10 bis 25% niedriger als die des gasdichten Gewebeteils ist und der vorzugsweise eine Kreuzköperbindung, insbesondere eine Kett-Kreuzköperbindung aufweist.

Es sind ferner solche erfindungsgemäßen Airbags bevorzugt, bei denen das gasdichte Gewebe aus gedrehten Kettgarnen und ungedrehten Schußgarnen, das gasabführende Gewebe dagegen aus gedrehten Kett- und Schußgarnen besteht.

Besonders bevorzugte Ausführungsformen des erfindungsgemäßen Gewebes und Airbags sind diejenigen die eine Kombination mehrerer der oben genannten, bevorzugten Merkmale aufweisen.

Die Herstellung des erfindungsgemäßen Gewebes erfolgt nach an sich bekannten Webverfahren und ist dadurch gekennzeichnet, daß ein synthetisches Garn aus einem hochfesten Polyesterfilamentgarn eines Einzeltiters von 4 dtex oder weniger und eines Garntiters im Bereich von 250 bis 550 dtex verwebt wird.

Vorzugsweise wird ein Polyestergarn mit einer feinheitsbezogenen Höchstzugkraft von mehr als 60 cN/tex und einer Höchstzugkraft-Dehnung von mehr als 15% verwebt. Weiterhin ist es vorteilhaft, wenn ein Polyestergarn, das einen Thermoschrumpf bei 200°C von weniger als 9 %, vorzugsweise weniger als 6 %, insbesondere weniger als 4,7 %, besitzt, verwebt wird.

Insbesondere wird zur Herstellung eines Gewebes für den gasdichten Teil eines Airbags, bei dem ein gasdichter und ein gasabführender Gewebeteil vorgesehen sind, ein gedrehtes Kettgarn und ein ungedrehtes Schußgarn verwebt. Zur Herstellung eines Gewebes für den gasabführenden Teil ein wird vorzugsweise ein gedrehtes Kettgarn und ein gedrehtes oder ein ungedrehtes Schußgarn verwebt.

Es hat sich ferner als vorteilhaft erwiesen, wenn eine Leinwandbindung 1/1, vorzugsweise aber für das gasdichte Material eine Ripstopbindung, für das gasabführende Material eine Kreuzköperbindung, insbesondere eine Kett-Kreuzköperbindung gewebt wird.

Weiterhin ergeben sich dann Vorteile, wenn beim Weben die Maschineneinstellung so erfolgt, daß sich die weiteren, oben genannten bevorzugten Gewebeparameter ergeben.

Die Herstellung eines erfindungsgemäßen Airbags, bei dem ein gasdichter und ein gasabführender Gewebeteil vorgesehen sind, erfolgt durch Zusammensetzen geeignet zugeschnittener Gewebebahnen in ansich bekannter Weise und ist dadurch gekennzeichnet, daß für den gasdichten Gewebeteil ein Gewebe gemäß Anspruch 1, mit maximal dichter Gewebeeinstellung und für den gasabführenden Gewebeteil ein Gewebe gemäß Anspruch 1, dessen Gewebeeinstellung um 10 bis 25% niedriger als die des gasdichten Gewebeteils ist, eingesetzt wird.

Vorzugsweise wird für den gasdichten Gewebeteil ein Gewebe aus gedrehten Kettgarnen und ungedrehten Schußgarnen und für den gasabführenden Gewebeteil ein Gewebe aus gedrehten Kett- und Schußgarnen eingesetzt.

Die Herstellung weiterer, besonders bevorzugter Ausführungsformen des erfindungsgemäßen Airbags erfolgt durch Verwendung von oben beschriebenen Geweben mit einer Kombination bevorzugter Eigenschaften, beispielweise durch Einsatz eines gasdichten Mantelgewebes mit Ripstopbindung und eines gasabführenden Gewebes mit einer Kreuzköperbindung.

Beispiel 1

Zur Herstellung eines unbeschichteten Gewebes für einen Beifahrer-Airbag wurde ein Polyesterfilamentgarn TREVIRA HOCHFEST 315 dtex f96 verwendet, das somit einen Einzeltiter von 3,3 dtex besaß.

Dieses Garn hatte folgende Eigenschaften:
Höchstzugkraft 20,8 N
feinheitsbezogene Höchstzugkraft 66 cN/tex
Höchstzugkraft-Dehnung 19 %
Thermoschrumpf bei 200C 4,7 %
Schmelzpunkt 257°C

A) Als Gewebekonstruktion wurde eine Leinwandbindung 1/1 gewählt, wobei in der Kette TREVIRA HOCHFEST 315 dtex f96 VZ 120-ungeschlichtet und im Schuß TREVIRA HOCHFEST 315 dtex f96 VO eingesetzt wurde. Es wurde die maximal mögliche Gewebeeinstellung gewählt, die sowohl in der Kette wie auch im Schuß 26 Faden/cm betrug.

Die Daten des Rohgewebes waren:

| Flächengewicht | 177 g/m² |
| Gewebedicke | 0,26 mm |
| | |
| Höchstzugkraft | 255 daN (Kette) |
| (gemessen an einem 5 cm | 265 daN (Schuß) |
| breiten Gewebestreifen) | |
| | |
| Höchstzugkraft-Dehnung | 34 % (Kette) |
| (gemessen an einem 5 cm | 26 % (Schuß) |
| breiten Gewebestreifen) | |
| | |
| Luftdurchlässigkeit | 6 l m⁻² sec⁻¹ bei 50mm WS |

Dieses, aus den ungeschlichteten Polyestergarnen bestehende Gewebe wurde ohne Ausrüstung und ohne Kalandrierung hergestellt und mit keinerlei Beschichtung versehen und im gasdichten Teil eines Airbags eingesetzt.

B) Für den gasabführenden Teil des Airbags wurde ein Gewebe mit folgender Gewebekonstruktion verwendet:

Kette: TREVIRA HOCHFEST 315 dtex f96 VZ 120 ungeschlichtet
Schuß: TREVIRA HOCHFEST 315 dtex f96 VZ 120
Gewebeeinstellung: 22 Fäden/cm (Kette) 24 Faden/cm (Schuß)
Leinwandbindung: 1/1

Die Daten des Rohgewebes des gasabführenden Airbag-Teils waren:

| Flächengewicht: | 156 g/m² |
| Gewebedicke: | 0,23 mm |
| Höchstzugkraft: | 226 daN (Kette) |
| (5 cm breiter Gewebestreifen) | 226 daN (Schuß) |
| | |
| Höchstzugkraft-Dehnung: | 25,5 % (Kette) |
| (5 cm breiter Gewebestreifen) | 27 % (Schuß) |
| | |
| Luftdurchlässigkeit: | 78 l m⁻² sec⁻¹ bei 50mm WS |

Wie ersichtlich, wurden bei dem Gewebe des gasabführenden Airbagteils nicht nur gedrehte Kettgarne, sondern auch gedrehte Schußgarne verwendet sowie gegenüber dem Gewebe des gasdichten Airbagteils die Gewebeeinstellung verringert, und zwar von 26 Faden/cm auf 22 bzw. 24 Faden/cm. Hierdurch ergab sich eine Erhöhung der Luftdurchlässigkeit von 6 auf 78 l.m⁻².sec⁻¹ bei 50mm WS.

Beispiel 2

A) Zur Herstellung eines unbeschichteten Gewebes für den gasdichten Teil eines Beifahrer-Airbags wurde ein Polyesterfilamentgarn TREVIRA HOCHFEST 315 dtex f100 verwendet, das somit einen Einzeltiter von 3,15 dtex besaß.

Dieses Garn hatte folgende Eigenschaften:

| Höchstzugkraft: | 20,8 N |
| feinheitsbezogene Höchstzugkraft: | 66 cN/tex |
| Höchstzugkraft-Dehnung: | 19 % |
| Thermoschrumpf bei 200C: | 4,7 % |
| Schmelzpunkt: | 257°C |

Als Gewebekonstruktion wurde eine Einstellung Ripstop (5 mm) mit 28/28 Fäden/cm gewählt, wobei in der Kette TREVIRA HOCHFEST 315 dtex f100 VZ 120 und im Schuß TREVIRA HOCHFEST 315 dtex f100 VO eingesetzt wurde.

Unter "Ripstop (5 mm)" ist dabei eine Ripstop-Bindung zu verstehen, bei der in Abstand von etwa 5 mm jeweils ein Doppelfaden in Kette und Schuß eingebracht wurde.

Die Daten des Rohgewebes waren:

| | |
|---|---|
| Flächengewicht | 194 g/m² |
| Gewebedicke | 0,33 mm |
| Höchstzugkraft (gemessen an einem 5 cm breiten Gewebestreifen) | 239 daN (Kette) 277 daN (Schuß) |
| Höchstzugkraft-Dehnung (gemessen an einem 5 cm breiten Gewebestreifen) | 31 % (Kette) 28 % (Schuß) |
| Luftdurchlässigkeit | 4,7 l m$^{-2}$ sec$^{-1}$ bei 50mm WS |

Dieses aus den ungeschlichteten Polyestergarnen bestehende Gewebe wurde ohne Ausrüstung und ohne Kalandrierung hergestellt und mit keinerlei Beschichtung versehen und im gasdichten Teil eines Airbags eingesetzt.

B) Für den gasabführenden Teil des Airbags wurde ein Gewebe mit folgender Gewebekonstruktion verwendet:

Kette:     TREVIRA HOCHFEST 315 dtex f100 VZ 120 - ungeschlichtet
Schuß:     TREVIRA HOCHFEST 315 dtex f100 VZ 120

Gewebeeinstellung: Kett-Kreuzkörper 2/2 mit 24 Fäden/cm (Kette) und 24 Fäden/cm (Schuß).

Die Daten des Rohgewebes des gasabführenden Airbag-Teils waren:

Flächengewicht:                     159 g/m$^2$
Gewebedicke:                        0,25 mm
Höchstzugkraft:                     240 daN (Kette)
(5 cm breiter Gewebestreifen)       229 daN (Schuß)
Höchstzugkraft-Dehnung:             25 % (Kette)
(5 cm breiter Gewebestreifen)       23 % (Schuß)
Luftdurchlässigkeit:                48 l m$^{-2}$ sec$^{-1}$ bei 50mm WS

Beispiel 3

A) In analoger Weise wie in den Teilen A) der vorangehenden Beispiele beschrieben kann ein Mantelgewebe für einen Airbag auch erhalten werden, wenn man ein Polyestergarn der obigen Spezifikation mit einem Titer von 400 dtex f100 einsetzt. Wählt man die aus der folgenden Übersicht ersichtlichen Einstellungen, so erhält man die angegebenen Gewebedaten.

| | |
|---|---|
| Garntiter | 400 dtex f100 |
| Konstruktion | Ripstop (5 mm) |
| Fadendichte | |
| (Kette/Schuß) | 24/24 |
| Flächengewicht | 210 g/m² |
| Gewebedicke | 0,36 mm |
| Höchstzugkraft (5 cm) | |
| (Kette/Schuß) | 255/303 daN |
| Höchstzugkraft-Deh-nung (5 cm) | |
| (Kette/Schuß) | 35/29 |
| Luftdurchlässigkeit | |
| l m⁻² sec⁻¹ | |
| bei 50 mm Ws | 9,4 |

B) In analoger Weise wie in den Teilen B) der vorangehenden Beispiele beschrieben kann ein gasdurchlässiges Gewebe für einen Airbag auch erhalten werden, wenn man in der Kette TREVIRA HOCHFEST 400 dtex f100 VZ 120(120 T/m in Z-Richtung) und im Schuß TREVIRA HOCHFEST 400 dtex f100 VO (ungedreht) einsetzt. Wählt man die aus der folgenden Übersicht ersichtlichen Einstellungen, so erhält man die angegebenen Gewebedaten.

| | |
|---|---|
| Konstruktion | Kett-Kreuzköper 2/2 |
| Fadendichte | |
| (Kette/Schuß) | 20/20 cm⁻¹ |
| Flächengewicht | 163 g/m² |
| Gewebedicke | 0,35 mm |
| Höchstzugkraft (5 cm) | |
| (Kette/Schuß) | 250/236 daN |
| Höchstzugkraft-Deh-nung (5 cm) | |
| (Kette/Schuß) | 26/21 |
| Luftdurchlässigkeit | |
| l m⁻² sec⁻¹ | |
| bei 50 mm Ws | 90 |

**Patentansprüche**

1. Gewebe aus synthetischem Garn für einen Airbag, das beschichtungsfrei ausgebildet ist, dadurch gekennzeichnet, daß das synthetische Garn aus einem hochfesten Polyesterfilamentgarn eines Einzeltiters von 4 dtex oder weniger und eines Garntiters im Bereich von 250 bis 550 dtex besteht.

2. Gewebe nach Anspruch 1, dadurch gekennzeichnet, daß das Polyestergarn eine feinheitsbezogene Höchstzugkraft von mehr als 60 cN/tex und eine Höchstzugkraft-Dehnung von mehr als 15% besitzt.

3. Gewebe nach einem der vorhergehenden Ansprüche, dadurch gekennzeichnet, daß das Polyestergarn einen Thermoschrumpf bei 200°C von weniger als 9 % besitzt.

4. Gewebe nach einem der vorherigen Ansprüche, dadurch gekennzeichnet, daß das Polyestergarn schlichtefrei ist.

5. Gewebe nach Anspruch 1 für den gasdichten Teil eines Airbags, bei dem ein gasdichter und ein gasabführender Gewebeteil vorgesehen sind, dadurch gekennzeichnet, daß dieses Gewebe aus gedrehten Kettgarnen und ungedrehten Schußgarnen besteht.

6. Gewebe nach Anspruch 1 für den gasabführenden Teil eines Airbags, bei dem ein gasdichter und ein gasabführender Gewebeteil vorgesehen sind, dadurch gekennzeichnet, daß dieses Gewebe aus gedrehten Kettgarnen und gedrehten oder ungedrehten Schußgarnen besteht.

7. Gewebe nach Anspruch 5 oder 6, dadurch gekennzeichnet, daß die Drehung der Garne im Bereich von 110 - 130/m liegt.

8. Gewebe nach Anspruch 1 für den gasdichten Teil eines Airbags, bei dem ein gasdichter und ein gasabführender Gewebeteil vorgesehen sind, dadurch gekennzeichnet, daß dieses Gewebe eine Ripstopbindung aufweist.

9. Gewebe nach Anspruch 1 für den gasabführenden Teil eines Airbags, bei dem ein gasdichter und ein gasabführender Gewebeteil vorgesehen sind, dadurch gekennzeichnet, daß es eine Kreuzköperbindung aufweist.

10. Gewebe nach einem der vorhergehenden Ansprüche, dadurch gekennzeichnet, daß es für den gasdichten Teil des Airbags eine - für den gewählten Garntiter und die gewählte Gewebekonstruktion - maximal dichte Gewebeeinstellung und für den gasabführenden Teil des Airbags eine um 10 bis 25 % niedrigere Gewebeeinstellung besitzt.

11. Gewebe nach einem der vorhergehenden Ansprüche, dadurch gekennzeichnet, daß es ein Flächengewicht von weniger als 200 g/m² und eine Gewebedicke von weniger als 0,35 mm besitzt.

12. Gewebe nach einem der vorhergehenden Ansprüche, dadurch gekennzeichnet, daß es eine Höchstzugkraft von mehr als 220 daN und eine Höchstzugkraftdehnung von mehr als 25%, beides gemessen an einem 5 cm breiten Gewebestreifen, besitzt.

13. Airbag, der aus Geweben nach einem der vorhergehenden Ansprüche aufgebaut ist.

14. Airbag gemäß Anspruch 13, bei dem ein gasdichter und ein gasabführender Gewebeteil vorgesehen sind, dadurch gekennzeichnet, daß der gasdichte Gewebeteil aus einem Gewebe mit Ripstopbindung und maximal dichter Gewebeeinstellung besteht.

15. Airbag gemäß Anspruch 13, bei dem ein gasdichter und ein gasabführender Gewebeteil vorgesehen sind, dadurch gekennzeichnet, daß der gasabführende Gewebeteil aus einem Gewebe besteht, dessen Gewebeeinstellung um 10 bis 25% niedriger als die des gasdichten Gewebeteils ist.

16. Airbag gemäß Anspruch 13, bei dem ein gasdichter und ein gasabführender Gewebeteil vorgesehen sind, dadurch gekennzeichnet, daß das gasdichte Gewebe aus gedrehten Kettgarnen und ungedrehten Schußgarnen besteht.

**17.** Airbag gemäß Anspruch 13, bei dem ein gasdichter und ein gasabführender Gewebeteil vorgesehen sind, dadurch gekennzeichnet, daß das gasabführende Gewebe aus gedrehten Kett- und Schußgarnen besteht.

**18.** Verfahren zur Herstellung eines Gewebes für einen Airbag, das beschichtungsfrei ausgebildet ist, dadurch gekennzeichnet, daß ein synthetisches Garn aus einem hochfesten Polyesterfilamentgarn eines Einzeltiters von weniger als 4 dtex und eines Garntiters im Bereich von 250 bis 550 dtex verwebt wird.

**19.** Verfahren nach Anspruch 18, dadurch gekennzeichnet, daß ein Polyestergarn mit einer feinheitsbezogenen Höchstzugkraft von mehr als 60 cN/tex und einer Höchstzugkraft-Dehnung von mehr als 15% verwebt wird.

**20.** Verfahren nach einem der Ansprüche 18 oder 19, dadurch gekennzeichnet, daß ein Polyestergarn, das einen Thermoschrumpf bei 200°C von weniger als 9% besitzt, verwebt wird.

**21.** Verfahren nach Anspruch 18 zur Herstellung eines Gewebes für den gasdichten Teil eines Airbags, bei dem ein gasdichter und ein gasabführender Gewebeteil vorgesehen sind, dadurch gekennzeichnet, daß ein gedrehtes Kettgarn und ein gedrehtes oder ungedrehtes Schußgarn verwebt wird.

**22.** Verfahren nach Anspruch 18 zur Herstellung eines Gewebes für den gasabführenden Teil eines Airbags, bei dem ein gasdichter und ein gasabführender Gewebeteil vorgesehen sind, dadurch gekennzeichnet, daß ein gedrehtes Kettgarn und ein gedrehtes Schußgarn verwebt wird.

**23.** Verfahren nach Anspruch 18 zur Herstellung eines Gewebes für den gasdichten Teil eines Airbags, bei dem ein gasdichter und ein gasabführender Gewebeteil vorgesehen sind, dadurch gekennzeichnet, daß eine Ripstopbindung gewebt wird.

**24.** Verfahren nach Anspruch 18 zur Herstellung eines Gewebes für den gasabführenden Teil eines Airbags, bei dem ein gasdichter und ein gasabführender Gewebeteil vorgesehen sind, dadurch gekennzeichnet, daß eine Kreuzköperbindung gewebt wird.

**25.** Verfahren zur Herstellung eines Airbags, bei dem ein gasdichter und ein gasabführender Gewebeteil vorgesehen sind, durch Zusammensetzen geeignet zugeschnittener Gewebebahnen in ansich bekannter Weise, dadurch gekennzeichnet, daß für den gasdichten Gewebeteil ein Gewebe gemäß Anspruch 1 mit maximal dichter Gewebeeinstellung und für den gasabführenden Gewebeteil ein Gewebe gemäß Anspruch 1, dessen Gewebeeinstellung um 10 bis 25% niedriger als die des gasdichten Gewebeteils ist, eingesetzt wird.

**26.** Verfahren gemäß Anspruch 25, dadurch gekennzeichnet, daß für den gasdichten Gewebeteil ein Gewebe mit Ripstopbindung, vorzugweise aus gedrehten Kettgarnen und ungedrehten Schußgarnen und für den gasabführenden Gewebeteil ein Gewebe mit Kreuzköperbindung, vorzugsweise aus gedrehten Kett- und Schußgarnen eingesetzt wird.

## Claims

**1.** An uncoated woven synthetic yarn fabric for an airbag, wherein the synthetic yarn is a high-tenacity polyester filament yarn with a filament linear density of 4 dtex or less and a yarn linear density within the range from 250 to 550 dtex.

**2.** The fabric of claim 1, wherein the polyester yarn has a tenacity of more than 60 cN/tex and a breaking extension of more than 15%.

**3.** The fabric of any one of the preceding claims, wherein the polyester yarn has a hot air shrinkage at 200°C of less than 9%.

**4.** The fabric of any one of the preceding claims, wherein the polyester yarn is unsized.

**5.** The fabric of claim 1 for the gastight part of an airbag made of a gastight and a gas-releasing fabric part, comprising twisted warp yarns and untwisted weft yarns.

6. The fabric of claim 1 for the gas-releasing part of an airbag made of a gastight and a gas-releasing fabric part, comprising twisted warp yarns and twisted or untwisted weft yarns.

7. The fabric of claim 5 or 6, wherein the yarn twist is within the range 110-130 turns/m.

8. The fabric of claim 1 for the gastight part of an airbag made of a gastight and a gas-releasing fabric part, constructed with a rip stop weave.

9. The fabric of claim 1 for the gas-releasing part of an airbag made of a gastight and a gas-releasing fabric part, having a cross-twill weave.

10. The fabric of any one of the preceding claims, possessing the maximum set for the chosen yarn linear density and the chosen fabric construction for the gastight part of the airbag and a 10 to 25% lower set for the gas-releasing part of the airbag.

11. The fabric of any one of the preceding claims, having a basis weight of less than 200 g/m$^2$ and a thickness of less than 0.35 mm.

12. The fabric of any one of the preceding claims, having a breaking strength of more than 220 daN and a breaking extension of more 25%, each measured on a 5 cm wide strip.

13. An airbag constructed from fabrics as claimed in any one of the preceding claims.

14. The airbag of claim 13 with a gastight and a gas-releasing fabric part, wherein the gastight fabric part is a fabric with a rip stop weave and a maximum set.

15. The airbag of claim 13 with a gastight and a gas-releasing fabric part, wherein the gas-releasing part is a fabric whose set is 10 to 25% less than that of the gastight fabric part.

16. The airbag of claim 13 with a gastight and a gas-releasing fabric part, wherein the gastight fabric comprises twisted warp yarns and untwisted weft yarns.

17. The airbag of claim 13 with a gastight and a gas-releasing fabric part, wherein the gas-releasing fabric comprises twisted warp and weft yarns.

18. A process for manufacturing an uncoated airbag fabric, which comprises weaving a high-tenacity polyester filament yarn having a filament linear density of less than 4 dtex and a yarn linear density within the range from 250 to 550 dtex.

19. The process of claim 18, wherein the polyester yarn has a tenacity of more than 60 cN/tex and a breaking extension of more than 15%.

20. The process of either of claims 18 and 19, wherein the polyester yarn has a hot air shrinkage at 200°C of less than 9%.

21. The process of claim 18 for manufacturing a fabric for the gastight part of an airbag with a gastight and a gas-releasing fabric part, which comprises weaving a twisted warp yarn and a twisted or untwisted weft yarn.

22. The process of claim 18 for manufacturing a fabric for the gas-releasing part of an airbag with a gastight and a gas-releasing fabric part, which comprises weaving a twisted warp yarn and a twisted weft yarn.

23. The process of claim 18 for manufacturing a fabric for the gastight part of an airbag with a gastight and a gas-releasing fabric part, which comprises using a rip stop construction.

24. The process of claim 18 for manufacturing a fabric for the gas-releasing part of an airbag with a gastight and a gas-releasing fabric part, which comprises using a cross-twill construction.

25. A process for manufacturing an airbag with a gastight and a gas-releasing fabric part by joining together suitably cut fabric webs in a conventional manner, which comprises using for the gastight fabric part the fabric as claimed in claim 1 with a maximum set and for the gas-releasing fabric part the fabric as claimed in claim 1 with a set 10 to 25% less than that of the gastight fabric part.

26. The process of claim 25, wherein the gastight fabric part is made of a fabric with a rip stop weave, preferably from twisted warp yarns and untwisted weft yarns, and the gas-releasing fabric part is made of a fabric with a cross-twill weave, preferably from twisted warp and weft yarns.


**Revendications**

1. Tissu en du fil synthétique pour un coussin gonflable (pour un "Airbag"), qui est réalisé sans enduit de revêtement, tissu caractérisé en ce que le fil synthétique consiste en un fil formé de filaments de polyester à grande résistance mécanique présentant un titre individuel de filament de 4 dtex ou moins et un titre de fil se situant entre 250 et 550 dtex.

2. Tissu selon la revendication 1, caractérisé en ce que le fil de polyester représente une résistance maximale à la traction, rapportée à la finesse, supérieure à 60 cN/tex et un allongement correspondant à la résistance maximale à la traction qui est supérieur à 15 %.

3. Tissu selon l'une des revendications précédentes, caractérisé en ce que le fil de polyester représente à 200°C un rétrécissement par effet thermique inférieur à 9 %.

4. Tissu selon l'une des revendications précédentes, caractérisé en ce que le fil de polyester n'est pas encollé.

5. Tissu selon la revendication 1 pour la partie étanche au gaz d'un coussin gonflable, pour lequel on prévoit une partie de tissu étanche au gaz. et une partie de tissu laissant passer le gaz, tissu caractérisé en ce qu'il consiste en des fils de chaîne torsadés et des fils de trame non torsadés.

6. Tissu selon la revendication 1 pour le départ de gaz d'un coussin gonflable, pour lequel on prévoit une partie de tissu étanche au gaz et une partie de tissu pour le départ de gaz, tissu caractérisé en ce qu'il consiste en des fils de chaîne torsadés et en des fils de trame torsadés ou non torsadés.

7. Tissu selon la revendication 5 ou 6, caractérisé en ce que la torsion des fils se situe entre 110 et 130/m.

8. Tissu selon la revendication 1 pour la partie étanche au gaz d'un coussin gonflable, dans le cas duquel on prévoit une partie de tissu étanche au gaz et une partie de tissu pour le départ de gaz, tissu caractérisé en ce qu'il présente une armure côte.

9. Tissu selon la revendication 1 pour la partie le cas duquel on prévoit une partie de tissu étanche au gaz et une partie de tissu pour le départ du gaz, tissu caractérisé en ce qu'il présente une armure sergé croisé.

10. Tissu selon l'une des revendications précédentes, caractérisé en ce qu'il possède, pour la partie étanche au gaz du coussin gonflable, un réglage, pour le titre choisi pour le fil et pour la construction ou armure choisie pour le tissu - de densité maximale des fils du tissu et pour la partie destinée au départ du gaz du coussin gonflable, un réglage inférieur de 10 à 25 %.

11. Tissu selon l'une des revendications précédentes, caractérisé en ce qu'il possède un poids surfacique inférieur à 200 g/m$^2$ et une épaisseur de tissu inférieure à 0,35 mm.

12. Tissu selon l'une des revendications précédentes, caractérisé en ce qu'il présente une force de résistance maximale à la traction supérieure à 220 daN et un allongement, correspondant à cette force maximale de résistance à la traction, supérieur à 25 %, les deux mesurés dans le cas d'une bande de tissu de 5 cm de largeur.

13. Coussin gonflable ("Airbag") qui est constitué de tissus selon l'une des revendications précédentes.

14. Coussin gonflable selon la revendication 13, dans le cas duquel on prévoit une partie de tissu étanche au gaz et une partie de tissu pour le départ du gaz, coussin caractérisé en ce que la partie de tissu étanche au gaz consiste en un tissu à armure côte et présentant un réglage maximal de la densité ou du nombre des fils du tissu.

15. Coussin gonflable selon la revendication 13, dans le cas duquel on prévoit une partie de tissu étanche au gaz et une partie de tissu pour le départ du gaz, coussin caractérisé en ce que la partie de tissu pour le départ du gaz consiste en un tissu dont le réglage du nombre des fils est inférieur de 10 à 25 % à celui de la partie de tissu étanche au gaz.

16. Coussin gonflable selon la revendication 13, dans le cas duquel on prévoit une partie de tissu étanche au gaz et une partie de tissu pour le départ de gaz, coussin caractérisé en ce que le tissu étanche au gaz consiste en des fils de chaîne torsadés et des fils de trame non torsadés.

17. Coussin gonflable selon la revendication 13, dans le cas duquel on prévoit une partie de tissu étanche au gaz et une partie de tissu pour le départ de gaz, coussin caractérisé en ce que le tissu pour le départ de gaz consiste en des fils de chaîne et en des fils de trame torsadés.

18. Procédé pour fabriquer un tissu pour un coussin gonflable (pour un "airbag"), qui est fabriqué sans enduit de revêtement, procédé caractérisé en ce qu'on tisse un fil synthétique formé d'un fil à filament en polyester de grande résistance mécanique, présentant un titre de filament unitaire inférieur à 4 dtex et un titre de fil se situant entre 250 et 550 dtex.

19. Procédé selon la revendication 18, caractérisé en ce qu'on tisse un fil de polyester ayant une résistance maximale à la traction, rapportée à la finesse, supérieure à 60 cN/tex et un allongement, correspondant à la résistance maximale à la traction, supérieur à 15 %.

20. Procédé selon l'une revendications 18 ou 19, caractérisé en ce qu'on tisse un fil de polyester présentant à 200°C un rétrécissement par effet thermique inférieur à 9%.

21. Procédé selon la revendication 18 pour fabriquer un tissu pour la partie étanche au gaz d'un coussin gonflable, dans le cas duquel on prévoit une partie de tissu étanche au gaz et une partie de tissu pour le départ de gaz, procédé caractérisé en ce qu'on tisse un fil de chaîne torsadé et un fil de trame torsadé ou non torsadé.

22. Procédé selon la revendication 18 pour fabriquer un tissu pour la partie destinée au départ des gaz d'un coussin gonflable, dans le cas duquel on prévoit une partie de tissu étanche au gaz et une partie de tissu pour le départ des gaz, procédé caractérisé en ce qu'on tisse un fil de chaîne torsadé et un fil de trame torsadé.

23. Procédé selon la revendication 18 pour fabriquer un tissu pour la partie étanche au gaz d'un coussin gonflable, dans le cas duquel on prévoit une partie étanche au gaz et une partie pour le départ de gaz, procédé caractérisé en ce qu'on tisse un tissu à armure côte.

24. Procédé selon la revendication 18 pour fabriquer un tissu pour la partie du départ de gaz d'un coussin gonflable, dans le cas duquel on prévoit une partie de tissu étanche au gaz et une partie pour le départ de gaz, procédé caractérisé en ce qu'on tisse un tissu à armure sergé croisé.

25. Procédé pour fabriquer un coussin gonflable (un "airbag"), dans le cas duquel on prévoit une partie de tissu étanche au gaz et une partie de tissu pour le départ du gaz, par regroupement, d'une façon connue en soi, de bandes de tissu découpées de façon convenable, procédé caractérisé en ce que, pour la partie de tissu étanche au gaz, on utilise un tissu selon la revendication 1 présentant la densité maximale possible du nombre des fils du tissu et, pour la partie de tissu pour le départ de gaz, on utilise un tissu selon la revendication 1, dont le nombre des fils ou le réglage du tissu est inférieur de 15 à 25 % à celui de la partie de tissu étanche au gaz .

26. Procédé selon la revendication 25, caractérisé en ce que, pour la partie de tissu étanche au gaz, on utilise un tissu à armure côte, avantageusement obtenu à partir de fils de chaîne torsadés et de fils de trame non torsadés, et, pour la partie de tissu pour le départ de gaz on utilise un tissu à armure sergé croisé, avantageusement un tissu obtenu à partir de fils de chaîne torsadés et de fils de trame torsadés.